# FASCICULE DE BREVET EUROPEEN

(11) **EP 0 938 683 B1**
(45) Date de publication et mention de la délivrance du brevet: **16.08.2001**
(21) Numéro de dépôt: 97926084.1
(22) Date de dépôt: 03.06.1997
(51) Int. Cl.: G01S 1/04, G01S 1/02

(54) **RECEPTEUR DE SIGNAUX DE SATELLITES AVEC DETECTEUR D'INCOHERENCE ENTRE MESURES PHASE DE CODE ET DE PORTEUSE**
EMPFÄNGER FÜR SATELLITENSIGNALE MIT DETEKTOR FÜR INKOHÄRENZ ZWISCHEN MESSUNGEN VON KODEPHASE UND TRÄGER
SATELLITE SIGNAL RECEIVER WITH DETECTOR OF INCOHERENCE BETWEEN CODE PHASE AND CARRIER FREQUENCY MEASUREMENTS

(30) Priorité: 07.06.1996 FR 9607074
(43) Date de publication de la demande: 01.09.1999
(73) Titulaire: THALES AVIONICS S.A., 78141 Vélizy Villacoublay Cédex (FR)
(72) Inventeur: ARETHENS, Jean-Pierre, Thomson-CSF S.C.P.I., F-94117 Arcueil Cedex (FR)
(74) Mandataire: Guérin, Michel
(86) Numéro de dépôt international: FR9700968
(87) Numéro de publication internationale: WO9747985

(56) Documents cités:
- GB-A- 2 295 063
- US-A- 5 436 632

## Description

L'invention concerne les récepteurs de positionnement par satellite tels que les récepteurs GPS (Global Positionning System).

Le système GPS utilise une constellation de satellites qui tournent autour de la terre sur des orbites très précisément déterminées, c'est-à-dire qu'on peut connaître à tout instant la position d'un satellite quelconque. Les satellites émettent des signaux radiofréquence contenant des données de navigation et des codes qui permettent d'identifier chaque satellite. Ces codes modulent en phase une fréquence porteuse. Un récepteur GPS, au sol ou sur un véhicule terrestre, aérien ou maritime, peut recevoir les signaux de plusieurs satellites simultanément, calculer précisément sa distance à chacun des satellites, et en déduire sa position précise en latitude, longitude, et altitude, dans un repère terrestre. Il peut en déduire aussi la date et l'heure précise de la réception dans le repère temporel du système GPS. Il peut enfin en déduire, par des mesures Doppler, son propre vecteur vitesse dans le repère terrestre (cas d'un récepteur monté sur un véhicule mobile).

Dans le système GPS, chaque satellite est identifié par un code pseudo-aléatoire qui lui est propre et qui module de manière répétitive (toutes les millisecondes par exemple) une fréquence porteuse émise par le satellite. Il existe des systèmes voisins du GPS, notamment le système GLONASS, dans lequel ce code pseudo-aléatoire existe également bien qu'il ne serve pas à identifier un satellite individuel. L'invention qui va être décrite est applicable directement au système GLONASS mais pour plus de simplicité on ne se référera dans la suite qu'au système GPS, et plus précisément à la partie "civile" du système GPS, lequel comporte aussi une partie militaire à laquelle l'invention est également applicable.

Le code pseudo-aléatoire est un code long (1023 bits à 1,023 MHz, soit 1 milliseconde), et une de ses fonctions principales est de permettre l'extraction du signal du satellite dans un niveau de bruit beaucoup plus élevé (30 dB par exemple) que le niveau du signal. Cette technique est maintenant bien connue sous le nom d'émission à étalement de spectre. Le signal est extrait du bruit grâce à une opération de corrélation, dans le récepteur, entre le signal reçu et un code pseudo-aléatoire périodique qui est identique à celui que l'on s'attend à trouver dans le signal. Si les codes ne coïncident pas temporellement, il n'y a aucune corrélation entre les signaux reçus et le code local engendré par un générateur de code local; s'ils coïncident presque, il y a une certaine corrélation, l'énergie de corrélation étant d'autant plus forte que la coïncidence est plus exacte. On peut donc établir un signal de corrélation permettant d'asservir un générateur de code local jusqu'à obtenir une coïncidence exacte du code local et du code modulant le signal émis par le satellite. Une boucle d'asservissement de code permet ensuite de maintenir cette coïncidence.

Le code pseudo-aléatoire est émis par le satellite à des instants extrêmement précis et connus au niveau du récepteur. On se sert de l'opération de corrélation pour déterminer l'instant d'arrivée de ce code dans le récepteur : on détermine l'instant caractéristique ou époque d'émission du code local, et comme ce code local coïncide avec le code reçu lorsque la corrélation maximale est établie, cet instant représente l'instant d'arrivée du code reçu. La différence entre un instant d'émission du code par le satellite et un instant de réception du code par le récepteur permet de déterminer un temps de parcours des signaux entre le satellite et le récepteur. Sachant que la vitesse de parcours des signaux est la vitesse de la lumière, on peut calculer la distance entre le récepteur et un satellite donné. La même opération faite sur deux autres satellites permet, par triangulation, de déterminer la position exacte du récepteur par rapport aux trois satellites.

En utilisant un quatrième satellite, on élimine les erreurs d'horloge du récepteur, l'horloge du récepteur n'étant pas aussi précise que celle des satellites. Outre la position du récepteur on peut alors calculer un temps précis de la mesure de position, dans le repère de temps des satellites GPS.

La position de chacun des satellites est connue à tout instant : elle est calculée à partir de tables stockées dans le récepteur et remises à jour par le message de navigation diffusé par les satellites. La vitesse des satellites à tout instant est également calculable à partir de ces tables.

On peut déduire, à partir des signaux envoyés par quatre satellites, le temps et la position du récepteur par rapport aux quatre satellites. Et, par changement de coordonnées, on obtient la position du récepteur dans un repère terrestre fixe.

De même, la vitesse du récepteur est calculée à partir d'une mesure d'effet Doppler sur la fréquence porteuse du signal radiofréquence envoyé par les satellites. On peut donc calculer la vitesse relative du récepteur par rapport à chacun des satellites, selon l'axe directeur qui relie ce satellite au récepteur. Quatre satellites sont nécessaires pour éliminer l'ambiguïté sur le temps. On obtient quatre vecteurs de vitesse relative différents, sur les axes directeurs reliant le récepteur aux quatre satellites. Des calculs simples permettent de déterminer la vitesse du récepteur selon trois axes dans le repère terrestre à partir de ces quatre vecteurs vitesse et des informations suivantes :
- les directions des axes directeurs récepteur-satellite par rapport à un repère terrestre fixe (longitude, latitude, altitude); ces directions sont obtenues elles-mêmes par la connaissance de la position du récepteur à un instant donné et la position de chaque satellite à ce même instant;
- les vitesses individuelles des satellites dans le repère terrestre à cet instant.

Si on utilise plus de quatre satellites, on obtient une information redondante. C'est le cas pour les récepteurs de qualité professionnelle utilisés notamment dans l'aéronautique. Cette information redondante permet d'éliminer des satellites qui fourniraient une information défectueuse. L'information est considérée comme défectueuse du fait qu'elle n'est pas cohérente avec l'ensemble des mesures effectuées. Un tel système de positionnement est connu du brevet US-A-5 436 632.

Une absence de cohérence peut venir de plusieurs causes, par exemple de la présence de trajets multiples d'ondes radiofréquence entre le satellite et le récepteur. Ces trajets multiples existent notamment lorsque des bâtiments ou d'autres obstacles fixes engendrent des réflexions au voisinage du récepteur.

Un but de l'invention est d'éliminer au mieux l'influence des trajets multiples sur les mesures de position.

Si le récepteur reçoit d'une part une onde émise en vue directe par un satellite, la mesure de distance obtenue à partir de ce trajet direct donne un certaine valeur de distance entre le récepteur et le satellite. S'il reçoit une onde selon un trajet réfléchi, il obtient une mesure correspondant au trajet allongé par la réflexion. Si l'obstacle est proche, le récepteur reçoit un signal combiné dont une partie correspond au trajet direct et une partie correspond au trajet réfléchi, et la mesure de distance (par le principe de corrélation indiqué ci-dessus) aboutit à une distance qui n'est ni tout-à-fait le trajet direct ni tout-à-fait le trajet réfléchi.

Pour des applications de mesure précise, ce défaut est inacceptable. C'est le cas en particulier pour les stations de réception fixes qui servent dans des systèmes de mesure différentielle. Dans ces systèmes, la station fixe au sol fait des mesures de position, compare les mesures à sa position fixe connue, et émet des informations de correction à apporter aux mesures correspondant à chaque satellite. Les récepteurs voisins, embarqués sur des véhicules, reçoivent des signaux de satellites et les corrections émises par la station fixe. Ils en déduisent des mesures de position corrigée. Si des multitrajets sont présents, ils biaisent la correction calculée par la station fixe. De plus, comme les satellites bougent, l'erreur due aux multitrajets varie en permanence.

Il serait souhaitable d'exclure de la mesure les satellites donnant une information défectueuse du fait qu'elle est affectée d'une erreur de trajets multiples, et ceci bien qu'on ne connaisse pas a priori cette erreur.

On propose selon l'invention de détecter une incohérence entre les variations de mesures de position, qui résultent de mesures sur la phase du code pseudo-aléatoire envoyé par le satellite, et les mesures de vitesse, qui résultent de mesures Doppler effectuées sur la porteuse radiofréquence. S'il n' y a pas cohérence entre les variations de mesure de position et les mesures de vitesse, c'est vraisemblablement parce qu'il y a des trajets multiples entre le satellite et le récepteur. Cette détection d'incohérence peut être effectuée sur chaque axe de satellite, et les satellites pour lesquels l'incohérence est la plus grande peuvent être exclus des mesures.

Plus précisément, l'invention propose un procédé d'élimination d'erreurs de mesure de position dans un récepteur de positionnement par satellites, dans lequel on mesure une distance relative et une vitesse relative entre le récepteur et chaque satellite, ce procédé étant caractérisé en ce qu'on détermine la variation temporelle de la distance relative et la différence entre cette variation temporelle et la vitesse relative, et on déduit de cette différence une mesure de l'incohérence entre la mesure de distance et la mesure de vitesse, cette incohérence représentant une erreur probable de mesure de position.

En d'autre mots, si la distance mesurée selon un axe de satellite varie d'une manière qui ne correspond pas à la vitesse relative mesurée entre le récepteur et le satellite selon ce même axe, on considère que les mesures sont entachées d'erreur, et, au delà d'un certain seuil d'incohérence, on exclut de la mesure le satellite qui est à l'origine de cette incohérence.

Le principe de l'invention est principalement destiné à être utilisé sur une station de réception fixe réémettant des messages de correction destinés à d'autres récepteurs mobiles, mais on peut également envisager son application directe sur des récepteurs embarqués.

L'invention est applicable tout particulièrement dans les stations fixes de systèmes GPS différentiels destinés à être implantés à proximité des aéroports pour faciliter l'atterrissage des avions.

Outre le procédé défini ci-dessus, l'invention porte sur un récepteur comportant les moyens de calcul spécifiques nécessaires à la mise en oeuvre de ce procédé.

D'autres caractéristiques et avantages de l'invention apparaîtront à la lecture de la description détaillée qui suit et qui est faite en référence aux dessins annexés dans lesquels la figure unique représente la constitution générale d'un récepteur GPS dans lequel la présente invention peut être mise en oeuvre.

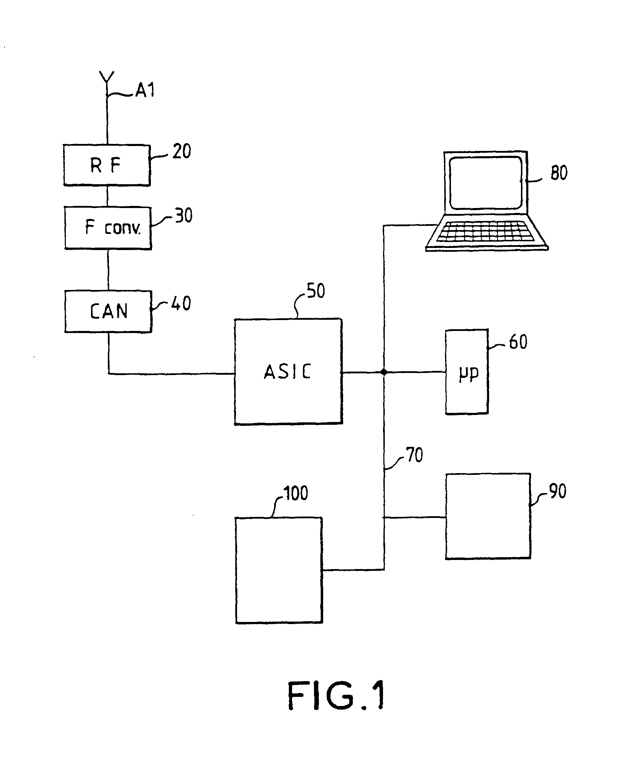

La figure 1 rappelle sommairement le principe général d'un récepteur GPS. Le récepteur comporte une partie radiofréquence, comprenant une antenne A1, un amplificateur radiofréquence 20 et divers circuits de filtrage associés, des circuits de conversion de fréquence 30, et un convertisseur analogique-numérique 40. Le convertisseur permet de fournir des signaux numériques à relativement basse fréquence destinés à être traités dans un circuit de traitement de signal numérique 50. Ce circuit est contrôlé par un microprocesseur 60 et des logiciels de calcul et de contrôle associés.

Le microprocesseur 60 a deux fonctions :
- d'une part, il élabore des données numériques utilisées par le circuit de traitement de signal numérique 50, à partir de données numériques fournies par ce circuit; en particulier, il effectue des calculs numériques nécessaires aux boucles d'asservissement numérique présentes dans le circuit de traitement numérique 50;
- et d'autre part il fournit des résultats définitifs de calcul de position, de temps, et de vitesse à l'utilisateur, c'est-à-dire soit sur un écran d'affichage numérique soit sur un bus numérique vers d'autres appareils qui ont besoin des résultats.

On pourrait évidemment avoir deux processeurs séparés pour effectuer ces deux fonctions. Dans la réalisation avec un seul microprocesseur 60, on a représenté un bus d'échanges 70 entre le microprocesseur 60, le circuit de traitement 50, un périphérique d'entrée/sortie 80, les mémoires de travail 90, et les mémoires de programmes 100 qui contiennent les programmes nécessaires au fonctionnement du microprocesseur.

Très sommairement, le circuit de traitement de signal numérique comporte soit un seul canal de traitement, les informations issues des divers satellites étant traitées de manière multiplexée, soit de préférence plusieurs canaux travaillant en parallèle chacun sur un satellite déterminé.

Chaque canal comporte une double boucle d'asservissement : asservissement de phase de porteuse et asservissement de phase de code.

La boucle de phase de porteuse utilise essentiellement un oscillateur local à contrôle numérique de phase, fournissant une phase numérique périodique (en dent de scie) à une fréquence correspondant à la fréquence de porteuse transposée, en tenant compte de l'effet doppler qui affecte la fréquence de porteuse transmise par un satellite. L'effet doppler est pris en compte du fait même de l'existence des boucles d'asservissement. Le microprocesseur 60 calcule un signal d'erreur de phase de porteuse; ce signal sert à commander l'oscillateur local pour asservir une fréquence porteuse locale sur la fréquence porteuse reçue du satellite.

La boucle d'asservissement de phase de code comporte un générateur de code local, piloté par un oscillateur à contrôle numérique de phase. Elle permet d'asservir les codes locaux sur le code reçu du satellite et de pouvoir ensuite déterminer la position temporelle exacte des codes locaux ainsi asservis. Le code local est corrélé avec le code reçu du satellite; le signal de corrélation est calculé par le microprocesseur et sert à asservir la boucle pour amener le code local en synchronisme avec le code reçu du satellite.

Les deux boucles d'asservissement, de code et de porteuse prennent en compte le décalage de fréquence doppler sur la fréquence porteuse et sur le code, résultant du déplacement relatif de l'avion et du satellite détecté. Ce décalage doppler est mesurable dans les boucles.

Les calculs de temps et de position GPS sont effectués à partir de l'état des boucles d'asservissement à un instant de mesure déterminé. A cet instant, on lit l'état exact de la phase des deux oscillateurs à contrôle numérique de phase.

Les boucles d'asservissement prévues dans le récepteur agissent pour caler une fréquence locale sur la fréquence porteuse reçue des satellites. Le décalage entre cette fréquence locale et la fréquence stable et connue émise par les satellites donne une indication de décalage doppler donc de différence entre la vitesse du satellite et la vitesse du récepteur selon l'axe reliant le satellite au récepteur.

Par conséquent, à partir de mesures effectuées sur le code pseudo-aléatoire, on calcule une position dite "position résolue", dans le repère terrestre; et, à partir de mesures effectuées sur les fréquence de porteuse, on calcule une vitesse dans le repère terrestre.

On suppose dans ce qui suit que le récepteur est fixe et qu'il calcule une correction de position PRC par rapport à sa propre position connue, pour l'envoyer aux récepteurs mobiles présents dans le voisinage. La correction de position est calculée selon chaque axe de satellite, PRCᵢ représentant la correction pour le satellite i, où i varie de 1 à n s'il y a n satellites.

Selon l'invention, on calcule la variation temporelle dPRCᵢ/dt de la correction PRCᵢ. Et on compare cette variation temporelle à la vitesse Vᵢ mesurée par effet Doppler selon le même axe de satellite i. La vitesse Vᵢ représente la composante de vitesse du satellite i selon l'axe i puisque la station de réception est fixe et a donc une vitesse nulle.

La variation temporelle est calculée d'une manière discrète, les mesures de position étant effectuées par exemple une fois par seconde.

On fait la moyenne (glissante) des différences successives Vᵢ-dPRCᵢ/dt, sur quelques mesures (5 à 10 mesures successives par exemple), et on observe la variation de cette moyenne glissante au cours du temps sur un plus grand nombre de mesures (128 ou 256 par exemple).

Si la différence moyenne ne varie pas, il est probable qu'il n'y a pas d'erreur due à des trajets multiples. Mais si la différence varie, et surtout si elle varie périodiquement, il est très probable qu'il y a de tels trajets multiples. La périodicité de variation vient du fait que les satellites se déplacent et que les différences de trajets dus aux réflexions sous des angles d'incidence différents peuvent être converties en variations de phase, chaque variation de 360° représentant une période.

Si les variations dépassent un seuil d'amplitude prédéterminée, on peut considérer que les mesures effectuées ne sont plus valables en ce qui concerne le satellite i.

Pour détecter une variation périodique de la moyenne de la différence Vᵢ - dPRCᵢ/dt, on peut utiliser des méthodes d'analyse classiques telles que la transformée de Fourier. Les 128 ou 256 mesures successives effectuées permettent de faire une transformée de Fourier faisant apparaître une périodicité de variation. D'autres algorithmes plus simples que la transformée de Fourier peuvent être utilisés pour déterminer une périodicité et/ou un seuil de variation de la différence. La transformée de Fourier permet en tous cas, si elle est effectuée sur un nombre d'échantillons correspondant à au moins quelques périodes de la variation, de faire apparaître facilement la fréquence caractéristique de cette variation et de vérifier si l'amplitude correspondant à cette fréquence est supérieure à un seuil déterminé.

Même si les variations de la différence moyenne ne font pas apparaître une périodicité nette, on peut considérer qu'il y a défaut de cohérence si l'énergie globale du spectre de fréquences de variations dépasse un seuil déterminé.

L'énergie du spectre de fréquences de variations de la différence moyenne représente, avec ou sans mise en évidence d'une périodicité caractéristique, une évaluation de l'incohérence entre les mesures de vitesse et de position selon un axe. En présence d'une variation périodique, la mesure d'incohérence pourra être la mesure d'amplitude de la fréquence détectée.

La moyenne calculée dans l'exemple décrit est obtenue à partir d'une correction de position, mais bien entendu on peut calculer la même moyenne en partant de la distance PRᵢ entre récepteur et satellite et non de la correction de distance PRCᵢ. Dans le cas d'une station fixe au sol c'est de toutes façons la même chose.

## Revendications

1. Procédé d'élimination d'erreurs de mesure de position dans un récepteur de positionnement par satellites, dans lequel on mesure une distance relative et une vitesse relative entre le récepteur et chaque satellite, ce procédé étant caractérisé en ce qu'on détermine la variation temporelle (dPRCᵢ/dt) de la distance relative et la différence entre cette variation temporelle et la vitesse relative Vᵢ, et on déduit de cette différence une mesure de l'incohérence entre la mesure de distance et la mesure de vitesse, cette incohérence représentant une erreur probable de mesure de position.

2. Procédé selon la revendication 1, caractérisée en ce qu'on calcule une moyenne glissante de la différence entre la variation temporelle de distance et la vitesse, et on détermine les variations de cette moyenne.

3. Procédé selon la revendication 2, caractérisé en ce qu'on détermine l'énergie de variation de la différence moyenne et on la compare à un seuil déterminé.

4. Procédé selon la revendication 2, caractérisé en ce qu'on recherche une fréquence caractéristique de variation de la différence moyenne, et on compare l'amplitude de cette fréquence à un seuil déterminé.

5. Récepteur de positionnement par satellites pour la mise en oeuvre du procédé selon l'une des revendications précédentes, comprenant des moyens de calcul de distance du récepteur à chacun des satellites d'un groupe de n satellites, et des moyens de calcul de vitesse relative par rapport à ce satellite, caractérisé en ce qu'il comporte en outre des moyens pour calculer la variation temporelle de la distance relative et la différence entre cette variation temporelle et la vitesse relative, ces moyens permettant de déduire de cette différence une mesure de l'incohérence entre la mesure de distance et la mesure de vitesse, cette incohérence représentant une erreur probable de mesure de position.

## Patentansprüche

1. Verfahren zur Eliminierung von Fehlern bei der Positionsmessung in einem Empfänger von Satelliten-Positionssignalen, bei dem man eine relative Entfernung und eine relative Geschwindigkeit zwischen dem Empfänger und jedem Satelliten mißt, dadurch gekennzeichnet, daß man die zeitliche Veränderung (dPRCᵢ/dt) der relativen Entfernung und die Differenz zwischen dieser zeitlichen Veränderung und der relativen Geschwindigkeit Vᵢ bestimmt und aus dieser Differenz einen Meßwert für die Inkohärenz zwischen der Entfernungsmessung und der Geschwindigkeitsmessung ableitet, wobei diese Inkohärenz ein mögliches Anzeichen für einen Fehler der Positionsmessung darstellt.

2. Verfahren nach Anspruch 1, dadurch gekennzeichnet, daß man einen gleitenden Mittelwert der Differenz zwischen der zeitlichen Änderung der Entfernung und der Geschwindigkeit berechnet und die Veränderungen dieses Mittelwerts bestimmt.

3. Verfahren nach Anspruch 2, dadurch gekennzeichnet, daß man die Energie der Veränderung der mittleren Differenz bestimmt und mit einer gegebenen Schwelle vergleicht.

4. Verfahren nach Anspruch 2, dadurch gekennzeichnet, daß man eine charakteristische Frequenz der Veränderung der mittleren Differenz sucht und die Amplitude dieser Frequenz mit einer bestimmten Schwelle vergleicht.

5. Empfänger von Satelliten-Positionssignalen für die Durchführung des Verfahrens nach einem der vorstehenden Ansprüche, der Mittel zur Berechnung der Entfernung des Empfängers von jedem der Satelliten aus einer Gruppe von n Satelliten sowie Mittel zur Berechnung der relativen Geschwindigkeit bezüglich dieses Satelliten enthält, dadurch gekennzeichnet, daß er außerdem Mittel zur Berechnung der zeitlichen Veränderung der relativen Entfernung sowie der Differenz dieser zeitlichen Veränderung und der relativen Geschwindigkeit enthält, die es ermöglichen, aus dieser Differenz einen Meßwert für die Inkohärenz zwischen der Entfernungsmessung und der Geschwindigkeitsmessung abzuleiten, wobei diese Inkohärenz ein Anzeichen für einen möglichen Fehler der Positionsmessung darstellt.

## Claims

1. Method for eliminating position measurement errors in a satellite positioning receiver, in which a relative distance and a relative velocity between the receiver and each satellite are measured, this method being characterized in that the time variation (dPRCᵢ/dt) of the relative distance and the difference between this time variation and the relative velocity Vᵢ are determined, and a measure of the incoherence between the distance measurement and the velocity measurement is deduced from this difference, this incoherence representing a probable position measurement error.

2. Method according to Claim 1, characterized in that a moving average of the difference between the time variation of the distance and the velocity is calculated, and the variations of this average are determined.

3. Method according to Claim 2, characterized in that the variation energy of the average difference is determined, and is compared with a determined threshold.

4. Method according to Claim 2, characterized in that a search is made for a characteristic variation frequency of the average difference, and the amplitude of this frequency is compared with a determined threshold.

5. Satellite positioning receiver for implementing the method according to one of the preceding claims, comprising means for calculating the receiver distance from each of the satellites in a group of n satellites, and means for calculating relative velocity with respect to this satellite, characterized in that it furthermore includes means for calculating the time variation of the relative difference, and the difference between this time variation and the relative velocity, these means making it possible to deduce from this difference a measure of the incoherence between the distance measurement and the velocity measurement, this incoherence representing a probable position measurement error.
